# EUROPEAN PATENT APPLICATION

(11) **EP 3 709 211 A1**
(43) Date of publication of application: **16.09.2020**
(21) Application number: 19821433.0
(22) Date of filing: 22.01.2019
(51) Int. Cl.: G06K 9/00

(54) **UNDER-SCREEN FINGERPRINT RECOGNITION SYSTEM, LIQUID CRYSTAL DISPLAY SCREEN FINGERPRINT RECOGNITION APPARATUS AND ELECTRONIC DEVICE**

(71) Applicant: SHENZHEN GOODIX TECHNOLOGY CO., LTD., Shenzhen, Guangdong 518045 (CN)
(72) Inventor: QING, Xiaogang, Shenzhen, Guangdong 518045 (CN); HE, Yi, Shenzhen, Guangdong 518045 (CN); LI, Shunzhan, Shenzhen, Guangdong 518045 (CN)
(74) Representative: J A Kemp LLP
(86) International application number: PCT/CN2019/072598
(87) International publication number: WO 2020/150879

(57) **Abstract**

The present application provides an under-screen fingerprint recognition system, a liquid crystal display fingerprint recognition apparatus and an electronic device. The under-screen fingerprint recognition system includes a fingerprint light source, a reflection unit and a fingerprint sensor; the reflection unit and the fingerprint sensor are disposed between the liquid crystal panel and the backlight module in the display module; a reflection surface of the reflection unit is toward the liquid crystal panel and a photosensitive surface of the fingerprint sensor. The present application can realize under-screen fingerprint recognition for an LCD.

## Description

### TECHNICAL FIELD

Embodiments of the present application relate to the recognition technology, and in particular, to an under-screen fingerprint recognition system, a liquid crystal display fingerprint recognition apparatus, and an electronic device.

### BACKGROUND

With the development of electronic technology, display screens of electronic devices are gradually developing to full screen, and the screen ratio is becoming higher and higher, which makes the current mainstream capacitive fingerprint module have nowhere to be placed, and an under-screen optical fingerprint came into being.

At present, for an organic light-emitting diode (OLED) display screen, the application of under-screen optical fingerprint recognition solution are more and more. The under-screen optical fingerprint solution of the OLED display screen detects a fingerprint by irradiating the finger using light of the screen itself and employing the light transmittance of the OLED display screen.

However, for a liquid crystal display (LCD), since the light transmittance of the backlight module of the LCD is so poor that an under-screen optical signal detecting loop of an optical fingerprint cannot be formed, thereby the under-screen optical fingerprint recognition cannot be realized.

### SUMMARY

The embodiments of the present application provide an under-screen fingerprint recognition system, a liquid crystal display fingerprint recognition apparatus, and an electronic device, so as to implement the under-screen optical fingerprint recognition of an LCD.

The embodiments of the present invention provide an under-screen fingerprint recognition system that is applicable to being located under a liquid crystal display module that has a liquid crystal panel and a backlight module to perform under-display screen optical fingerprint detection, and the under-screen fingerprint recognition system includes: a fingerprint light source, a reflection unit and a fingerprint sensor;
the fingerprint light source is configured to provide light for fingerprint detection, the reflection unit and the fingerprint sensor are disposed between the liquid crystal panel and the backlight module; the reflection unit has a reflection surface that is disposed toward the liquid crystal panel to receive the light that is emitted by the fingerprint light source, then is reflected, and then is incident through the liquid crystal panel;
the reflection unit is also toward a photosensitive surface of the fingerprint sensor to reflect the light to the photosensitive surface of the fingerprint sensor;
the fingerprint sensor is configured to detect, according to the light received, a fingerprint image of a finger pressing on the liquid crystal display module, and a field of view range of the fingerprint sensor is located in a display area of the liquid crystal display module.

The embodiments of the present application further provide a liquid crystal display fingerprint recognition apparatus, including: a display module and a fingerprint module; where the display module includes a liquid crystal panel and a backlight module that is disposed behind the liquid crystal panel; and the fingerprint module includes a fingerprint light source, a reflection unit and a fingerprint sensor;
the reflection unit and the fingerprint sensor are disposed between the liquid crystal panel and the backlight module; the reflection unit has a reflection surface that is disposed toward the liquid crystal panel to receive light that is emitted by the fingerprint light source, then is reflected, and then is incident through the liquid crystal panel;
the reflection unit is further configured to reflect the light to a photosensitive surface of the fingerprint sensor.

The embodiments of the present application further provide an electronic device, including: the under-screen fingerprint recognition system described above.

The embodiments of the present application provide an under-screen fingerprint recognition system, a liquid crystal display fingerprint recognition apparatus, and an electronic device, where the under-screen fingerprint recognition system is applicable to being located under a liquid crystal display module that has a liquid crystal panel and a backlight module to perform under-screen optical fingerprint detection, and the under-screen fingerprint recognition system includes: a fingerprint light source, a reflection unit and a fingerprint sensor, the reflection unit and the fingerprint sensor are disposed between the liquid crystal panel and the backlight module; the reflection unit has a reflection surface that is disposed toward the liquid crystal panel to receive light that is emitted by the fingerprint light source, then is reflected, and then is incident through the liquid crystal panel; the reflection unit is further configured to reflect the light to a photosensitive surface of the fingerprint sensor. The reflection unit and the fingerprint sensor of the under-screen fingerprint recognition system are disposed between the liquid crystal panel and the backlight module, and the light incident through the liquid crystal panel is reflected by the reflection unit to the photosensitive surface of the fingerprint sensor, which prevents fingerprint light from being blocked by the backlight module of the LCD; the light is reflected by the reflection unit, and thereby an under-screen optical signal detection loop of the optical fingerprint is realized for the LCD, and then the under-screen optical fingerprint recognition is realized for the LCD.

### BRIEF DESCRIPTION OF THE DRAWINGS

In order to more clearly illustrate the technical solutions in the embodiments of the present application or in the prior art, a brief introduction of the drawings used for describing the embodiments or the prior art will be made below. Obviously, the drawings in the following description are some embodiments of the present invention, and for those skilled in the art, other drawings may also be obtained according to these drawings without any creative effort.
FIG. 1 is a first schematic stack diagram of a liquid crystal display fingerprint recognition apparatus according to an embodiment of the present application;
FIG. 2 is a second schematic stack diagram of a liquid crystal display fingerprint recognition apparatus according to an embodiment of the present application;
FIG. 3 is a third schematic stack diagram of a liquid crystal display fingerprint recognition apparatus according to an embodiment of the present application;
FIG. 4 is a fourth schematic stack diagram of a liquid crystal display fingerprint recognition apparatus according to an embodiment of the present application;
FIG. 5 is a schematic structural diagram of an electronic device according to an embodiment of the present application;
FIG. 6 is a schematic structural diagram of another electronic device according to an embodiment of the present application.

### DESCRIPTION OF EMBODIMENTS

To make the purposes, technical solutions and advantages of the embodiments of the present application clearer, the technical solutions in the embodiments of the present application will be clearly and completely described below with reference to the drawings in the embodiments of the present application. Apparently, the described embodiments are some but not all of the embodiments according to the present application. All other embodiments obtained by those skilled in the art based on the embodiments of the present application without creative efforts fall within the protection scope of the present application.

All technical and scientific terms used herein have the same meaning as generally understood by those skilled in the art, unless otherwise defined. The terms used in the specification of the present application are only in order to describe the purpose of the specific embodiment, but are not intended to limit the present application. The term "and/or" used herein includes any and all combinations of one or more related listed items. Some embodiments of the present application are described below with reference to the accompanying drawings. The following embodiments and the features in the embodiments may be combined with each other when there's no conflict.

The following embodiments of the present application provide an under-screen fingerprint recognition system, a liquid crystal display fingerprint recognition apparatus and an electronic device, which can be applied to any electronic device having an LCD with an under-screen optical fingerprint recognition function, such as a smart phone, a notebook computer, a wearable device, and a household appliances. The under-screen optical fingerprint of the LCD can be partially implemented in a display area of the LCD or in the full screen.

The embodiments of the present application will be described below in combination with a plurality of examples.

In the liquid crystal display fingerprint recognition apparatus provided by the embodiments of the present application, the number of the reflection units of the fingerprint module may be one or more, and in the following, one reflection unit is taken as an example first for illustration of the liquid crystal display fingerprint recognition apparatus, in combination with a plurality of examples.

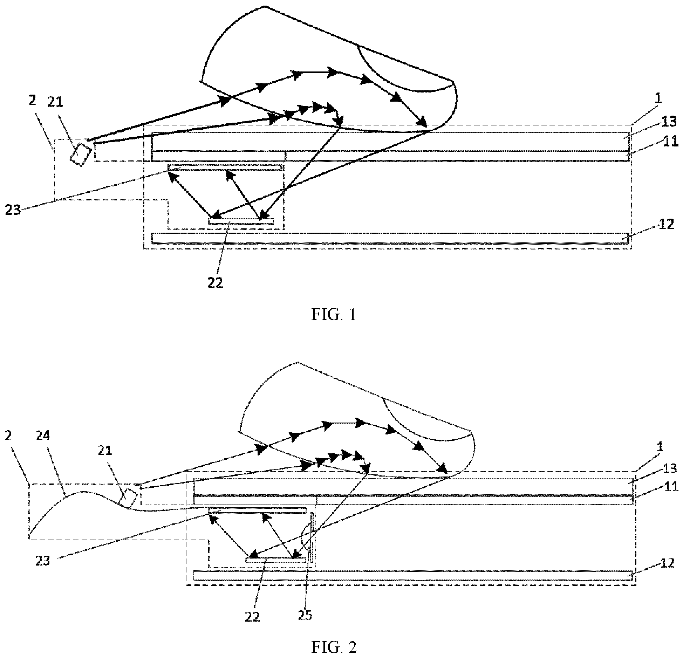

FIG. 1 is a first schematic stack diagram of a liquid crystal display fingerprint recognition apparatus according to an embodiment of the present application. As shown in FIG. 1, the liquid crystal display fingerprint recognition apparatus may include: a display module 1 and a fingerprint module 2. The display module 1 includes a liquid crystal panel 11 and a backlight module 12 that is disposed behind the liquid crystal panel 11. The fingerprint module 2 may also be referred to as an under-screen fingerprint recognition system, which may include a fingerprint light source 21, a reflection unit 22 and a fingerprint sensor 23.

The liquid crystal panel 11 may be located above the backlight module 12. The display module 1 may further include a cover plate 13, and the liquid crystal panel 11 may be located between the cover plate 13 and the backlight module 12.

The reflection unit 22 and the fingerprint sensor 23 are disposed between the liquid crystal panel 11 and the backlight module 12. A portion perpendicular to the reflection unit 22 and the fingerprint sensor 23 between the liquid crystal panel 11 and the backlight module 12 in the direction toward the liquid crystal panel 11 is a part of the liquid crystal panel 11, or is empty, or is a part of the cover plate 13, or, and it may be other non-display components. The reflection unit 22 and the fingerprint sensor 23 disposed between the liquid crystal panel 11 and the backlight module 12 may block the light from the backlight module 12 to the liquid crystal panel 11. Even if the portion perpendicular to the reflection unit 22 and the fingerprint sensor 23 in the direction toward the liquid crystal panel 11 is a part of the liquid crystal panel 11, such portion cannot display and is presented as a non-display area of the display module 1.

Therefore, the reflection unit 22 and the fingerprint sensor 23 can be disposed in an area between the liquid crystal panel 11 and the backlight module 12, which is perpendicular to the non-display area of the display module 1. The non-display area of the display module 1 may be a bottom non-display area of the display module 1, or may be a frame non-display area of the display module 1. Disposing the reflection unit 22 and the fingerprint sensor 23 of the fingerprint module 2 in an area between the liquid crystal panel 11 and the backlight module 12 perpendicular to a non-display area of the display module 1, can ensure the display effect of the display area of the display module 1.

The reflection unit 22 may have a reflection surface that is disposed toward the liquid crystal panel 11 to receive the light that is emitted by the fingerprint light source 21, then is reflected, and then is incident through the liquid crystal panel 11. If as shown in FIG. 1, the reflection unit 22 has one reflection surface, then the reflection surface of the reflection unit 22 may also be toward the photosensitive surface of the fingerprint sensor 23 and is further configured to reflect the light into the photosensitive surface of the fingerprint sensor 23. The liquid crystal panel 11 and the fingerprint sensor 23 may be disposed in different directions of the reflection surface of the reflection unit 22, where the different directions of the reflection surface of the reflection unit 22 may be distinguished by an optical axis of the reflection unit 22, that is, the different directions may refer to different directions on both sides of the optical axis of the reflection surface of the reflection unit 22. That is to say, the liquid crystal panel 11 may be located on one side of the optical axis of the reflection surface of the reflection unit 22, and the fingerprint sensor 23 may be located on the other side of the optical axis of the reflection surface of the reflection unit 22. If the reflection unit 22 has two reflection surfaces, then one reflection surface may be disposed toward the liquid crystal panel 11, and the other reflection surface may be disposed toward the photosensitive surface of the fingerprint sensor 23. That is, the liquid crystal panel 11 and the fingerprint sensor 23 may be respectively located in different directions toward the two different reflection surfaces.

If there is one reflection unit 22 in the fingerprint module 2, then the reflection surface of the reflection unit 22 may be a plane that is parallel to the liquid crystal panel 11, and the sensing surface of the fingerprint sensor 23 may be substantially parallel to the reflection surface of the reflection unit 22.

In the present embodiment, the display module 1 can be referred to as an LCD display module, and the cover plate 13 can be a glass cover plate. The backlight module 12 further includes a backlight source (not shown) to provide light to the liquid crystal panel 11, and the liquid crystal panel 11 can implement display function under the irradiation of the light emitted by the backlight source. The backlight source may be located at a side end of a light guide plate (not shown) in the backlight module 12 to transmit light to the liquid crystal panel 11 through the light guide plate. The backlight can be a white light emitting diode (LED).

The fingerprint light source 21 can be used to provide light for fingerprint detection. The reflection unit 22 and the fingerprint sensor 23 of the fingerprint module 2 are disposed between the liquid crystal panel 11 and the backlight module 12, and the reflection surface of the reflection unit 23 can be disposed toward the liquid crystal panel 11 so that the light emitted by the fingerprint light source 21 is reflected by the finger pressing on the cover 11, passes through the cover plate 13 and the liquid crystal panel 12 in sequence, and then is incident on the reflection surface of the reflection unit 22 between the liquid crystal panel 11 and the backlight module 12, i.e. below the liquid crystal panel 11, and the reflection surface of the reflection unit 22 reflects the incident light. The reflection surface of the reflection unit 22 is also toward the photosensitive surface of the fingerprint sensor 23, and is configured to reflect the incident light to the photosensitive surface of the fingerprint sensor 23, so that the fingerprint image data for fingerprint recognition is generated on the photosensitive surface of the fingerprint sensor 23.

The reflection surface of the reflection unit 22 may be a specular imaging element having a high reflectivity, and generally, the reflection can be implemented by an aluminum film or a silver mirror. Certainly, the reflection surface of the reflection unit 22 may also be implemented in other manners, which will not be detailed herein. The reflection unit 22 may be, for example, a reflecting mirror. It should be noted that the reflection unit 22 may also be other components that can perform light reflection, and is not limited to the reflecting mirror which is only a possible example. The embodiments of the present application do not limit this.

A field of view range of the fingerprint sensor 23 is located in the display area of the display module 1, that is, when a finger presses on the display module 1, the fingerprint sensor 23 may detect the fingerprint image data for fingerprint recognition. The fingerprint sensor 23 may be referred to as an optical sensor, an image sensor, an optical fingerprint sensor, an optical inductor, or a fingerprint detecting inductor, etc.

The light emitted by the fingerprint light source 21 is reflected by the finger, passes through the cover plate 13 and the liquid crystal panel 12 in sequence, and then is incident onto the reflection surface of the reflection unit 22 , the received light is reflected by the reflection surface of the reflection unit 22 to the photosensitive surface of the fingerprint sensor 23, so that the fingerprint sensor 23 generates a fingerprint image according to the received light, and then performs fingerprint detection.

The liquid crystal display fingerprint recognition apparatus provided by the embodiment of the present application may include: a display module and a fingerprint module; where the display module includes a liquid crystal panel and a backlight module that is disposed behind the liquid crystal panel; the fingerprint module includes a fingerprint light source, a reflection unit and a fingerprint sensor, and the reflection unit and the fingerprint sensor are disposed between the liquid crystal panel and the backlight module; the reflection unit has a reflection surface disposed toward the liquid crystal panel to receive light that is emitted by the fingerprint light source, then is reflected, and then is incident through the liquid crystal panel; the reflection unit is further configured to reflect the light to a photosensitive surface of the fingerprint sensor. The liquid crystal display fingerprint recognition apparatus can dispose the reflection unit and the fingerprint sensor of the fingerprint module between the liquid crystal panel and the backlight module of the display module, and the light incident through the liquid crystal panel is reflected by the reflection unit to the photosensitive surface of the fingerprint sensor, which prevents fingerprint light from being blocked by the backlight module of the LCD; the light is reflected by the reflection unit, which realizes an under-screen optical signal detection loop of optical fingerprint for the LCD, and then realizes the under-screen optical fingerprint recognition for the LCD.

On the basis of the above a liquid crystal display fingerprint recognition apparatus shown in FIG. 1, an embodiment of the present application may also provide a liquid crystal display fingerprint recognition apparatus. FIG. 2 is a second schematic stack diagram of a liquid crystal display fingerprint recognition apparatus according to an embodiment of the present application. As shown in FIG. 2, the liquid crystal display fingerprint recognition module is based on what is shown in FIG. 1, where the fingerprint module 2 may further include a transmission unit 25.

The transmission unit 25 may be disposed between the liquid crystal panel 11 and the reflection unit 22, that is, a surface of the transmission unit 25 may be toward the liquid crystal panel 11 and another surface may be toward the reflection surface of the reflection unit 22, so as to transmit the light incident through the liquid crystal panel 11 to the reflection surface of the reflection unit 22.

The transmission unit 25 may be an optical imaging element, and can also be referred to as a lens. The transmission unit 25 may have a spherical or aspherical optical transmission structure for focusing incident light onto the reflection surface of the reflection unit 22, and in the present embodiment, the incident light may specifically be the light incident through the liquid crystal panel 11. The transmission unit 25 may be a lens or a structure composed of a plurality of lenses. The lens of the transmission unit 25 may be generally made of a resin material or a glass material.

The optical axis of the transmission unit 25 may be perpendicular to the optical axis of the reflection unit 22. Certainly, the optical axis of the transmission unit 25 is not perpendicular to the optical axis of the reflection unit 22, for example nearly perpendicular. The optical axis of the transmission unit 25 is perpendicular to the optical axis of the reflection unit 22, so that the light transmitted by the transmission unit 25 is incident on the reflection surface of the reflection unit 22 as much as possible, thereby avoiding omission of the light and ensuring the clarity and integrity of the fingerprint image, and thus ensuring the accuracy of fingerprint detection.

If there is one reflection unit in the fingerprint module 2, a surface of the transmission unit 25 may be toward the liquid crystal panel 11 to receive the light incident through the liquid crystal panel 11; another surface of the transmission unit 11 is toward the reflection surface of the reflection unit 23 to transmit the light incident through the transmission unit 25 to the reflection surface of the reflection unit 23.

And the reflection surface of the reflection unit 25 is also toward the photosensitive surface of the fingerprint sensor 23, so as to reflect the light to the photosensitive surface of the fingerprint sensor 23.

In the liquid crystal display fingerprint recognition apparatus shown in FIG. 1 or FIG. 2, the reflection unit 22, the fingerprint sensor 23 and the transmission unit 25 of the fingerprint module 2 may be an integrated module, which can effectively protect the reflection unit.

In the liquid crystal display fingerprint recognition apparatus provided by the embodiment, the light that is incident through the liquid crystal panel is transmitted to the reflection surface of the reflection unit by the transmission unit disposed between the liquid crystal panel and the reflection unit, which improves the focus of the fingerprint light, makes a fingerprint image generated based on the fingerprint light clearer, and ensures the accuracy of fingerprint detection.

Optionally, in the liquid crystal display fingerprint recognition apparatus shown in FIG. 1 or FIG. 2, the fingerprint light source 21 may be located at a side end of the liquid crystal panel 11 near a non-display area. The example in which the fingerprint light source 21 is located at the side end of the liquid crystal panel 11 near the non-display area is shown in FIG. 1.

The fingerprint light source 21 is located at a side end of the liquid crystal panel 11, near the non-display area, which can avoid display interference caused by the fingerprint light source 21 and ensure the display effect of the display module, while the under-screen optical fingerprint recognition can be realized for the LCD.

Optionally, the fingerprint module 2 further includes: a printed circuit board (PCB) 24. The PCB 24 may be connected to the fingerprint sensor 23; the fingerprint source 21 may be located on the PCB 24.

Optionally, the PCB 24 may be a hard PCB or a flexible printed circuit board (FPCB).

It should be noted that in FIG. 1 or FIG. 2, the FPCB is taken as the PCB 24 for illustrating. The example of taking the hard PCB as the PCB 24 is similar to the FPCB and will not be repeated herein.

Optionally, in another example, the fingerprint light source 21 may also be located between the liquid crystal panel 11 and the backlight module 12. If the fingerprint light source 21 can be located between the liquid crystal panel 11 and the backlight module 12, and the light emitting surface of the fingerprint light source 21 is toward the liquid crystal panel 11.

In the liquid crystal display fingerprint recognition apparatus provided in the embodiment, the fingerprint light source 21 is disposed between the liquid crystal panel 11 and the backlight module 12, which improves the integration of the liquid crystal display fingerprint recognition apparatus.

Optionally, the fingerprint light source 21 as shown above may be an infrared light source regardless of the position of the fingerprint light source 21. The infrared light source may be an infrared light source having a wavelength of 850 nm. The infrared light source may be, for example, an infrared LED light source, an infrared vertical cavity surface emitting laser (VCSEL), an infrared laser diode, etc.

Optionally, if the fingerprint source 21 is an infrared light source, in order to avoid interference of visible light on fingerprint detection, the fingerprint module 2 further includes: an infrared filter (not shown) for filtering out the visible light other than the infrared light through the infrared filter.

In an implementation, the infrared filter may be located on a surface of the reflection unit 22 near the fingerprint sensor 23 as shown in FIG. 1 or FIG. 2; or a surface of the fingerprint sensor 23 near the reflection unit 22 as shown in FIG. 1 or FIG. 2.

In another implementation, the infrared filter may be located on a light incident surface or a light exit surface of the transmission unit 25 in FIG. 2.

In the liquid crystal display fingerprint recognition apparatus provided by the embodiment, the fingerprint light source is set as an infrared light source, so that the fingerprint light of the fingerprint detection is infrared light, which can avoid the interference of the fingerprint light on the visible light source for display, and ensure the display effect of the display module; and at the same time, the interference of the visible light source on the fingerprint light is also avoided, and the accuracy of the fingerprint detection is effectively ensured.

The following takes an example of two reflection units for illustration of the structure of the liquid crystal display fingerprint recognition apparatus, with reference to a plurality of examples. It should be noted that, in the liquid crystal display fingerprint recognition apparatus provided by the following embodiments, reference may be made to the above description for introduction of components that are the same as or similar to the components of the fingerprint module provided in FIG. 1 and FIG. 2 above, and the details will not be repeated below.

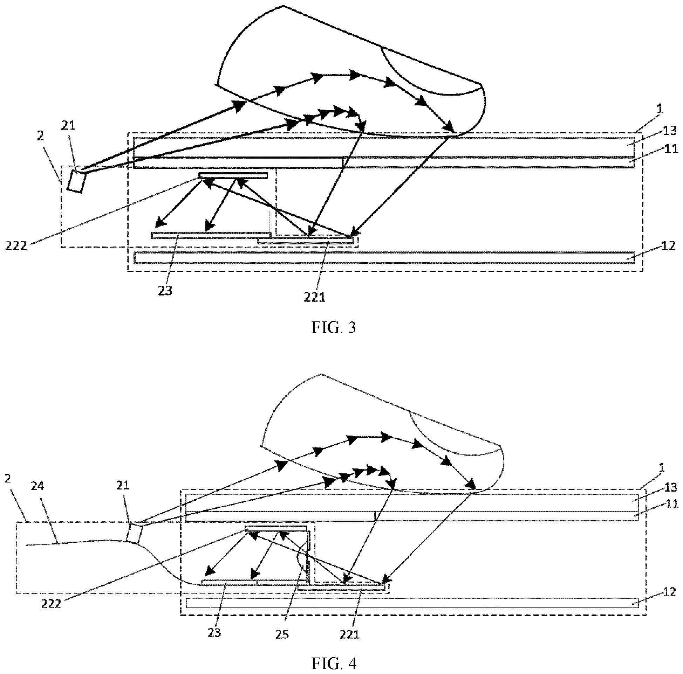

FIG. 3 is a third schematic stack diagram of a liquid crystal display fingerprint recognition apparatus according to an embodiment of the present application. As shown in FIG. 3, the liquid crystal display fingerprint recognition apparatus may include: a display module 1 and a fingerprint module 2. The display module 1 includes a liquid crystal panel 11 and a backlight module 12 that is disposed behind the liquid crystal panel 11. The fingerprint module 2 may also be referred to as an under-screen fingerprint recognition system that may include a fingerprint light source 21, a first reflection unit 221, a second reflection unit 222 and a fingerprint sensor 23.

The liquid crystal panel 11 may be located above the backlight module 12. The display module 1 may further include a cover plate 13, and the liquid crystal panel 11 may be located between the cover plate 13 and the backlight module 12.

The first reflection unit 221, the second reflection unit 222 and the fingerprint sensor 23 are disposed between the liquid crystal panel 11 and the backlight module 12. A portion perpendicular to the first reflection unit 221, the second reflection unit 222 and the fingerprint sensor 23 between the liquid crystal panel 11 and the backlight module 12 in the direction toward the liquid crystal panel 11 is a part of the liquid crystal panel 11, or is empty, or is a part of the cover plate 13, or, it may be other non-display components. The first reflection unit 221, the second reflection unit 222 and the fingerprint sensor 23 that are disposed between the liquid crystal panel 11 and the backlight module 12 may block the light from the backlight module 12 to the liquid crystal panel 11. Even if the portion perpendicular to the reflection unit 22 and the fingerprint sensor 23 in the direction toward the liquid crystal panel 11 is a part of the liquid crystal panel 11, such portion cannot display and is presented as a non-display area of the display module 1.

Therefore, the first reflection unit 221, the second reflection unit 222 and the fingerprint sensor 23 are disposed in an area between the liquid crystal panel 11 and the backlight module 12, which is perpendicular to the non-display area of the display module 1. The non-display area of the display module 1 may be a bottom non-display area of the display module 1, or may be a frame non-display area of the display module 1. Disposing the first reflection unit 221, the second reflection unit 222 and the fingerprint sensor 23 of the fingerprint module 2 in the area perpendicular to the non-display area of the display module 1 between the liquid crystal panel 11 and the backlight module 12 can ensure the display effect of the display area of the display module.

If there are two reflection units in the fingerprint module 2, that is, the first reflection unit 221 and the second reflection unit 222.

The first reflection unit 221 has a reflection surface that is disposed toward the liquid crystal panel 11 to receive the light that is emitted by the fingerprint light source 21, then is reflected, and then is incident through the liquid crystal panel 11. As shown in FIG. 3, if the first reflection unit 221 has one reflection surface, then the reflection surface of the first reflection unit 221 is also toward the reflection surface of the second reflection unit 222 and is further configured to reflect the light onto the reflection surface of the second reflection unit 222. The liquid crystal panel 11 and the second reflection unit 222 may be disposed in different directions of the reflection surface of the first reflection unit 221, where the different directions of the reflection surface of the first reflection unit 221 may be distinguished by the optical axis of the first reflection unit 221, that is, the different directions may refer to different directions on both sides of the optical axis of the reflection surface of the first reflection unit 221. That is to say, the liquid crystal panel 11 may be located on one side of the optical axis of the reflection surface of the first reflection unit 221, and the second reflection unit 222 may be located on the other side of the optical axis of the reflection surface of the first reflection unit 221. If the first reflection unit 221 has two reflection surfaces, one may be disposed toward the liquid crystal panel 11, and the other may be disposed toward the second reflection unit 222. That is, the liquid crystal panel 11 and the second reflection unit 222 may be respectively located in different directions toward the two different reflection surfaces.

The second reflection unit 222 may also have a reflection surface that is disposed toward the reflection surface of the first reflection unit 221 to receive the light reflected by the reflection surface of the first reflection unit 221. As shown in FIG. 3, if the second reflection unit 222 has one reflection surface, then the reflection surface of the second reflection unit 222 is also towards the photosensitive surface of the fingerprint sensor 23 to transmit the light reflected by the reflection surface of the second reflection unit 222 to the photosensitive surface of the fingerprint sensor 23. The first reflection unit 221 and the fingerprint sensor 23 may be located in different directions of the reflection surface of the second reflection unit 222, where the different directions of the reflection surface of the second reflection unit 222 may be distinguished by the optical axis of the second reflection unit 222, that is, the different directions may refer to different directions on both sides of the optical axis of the reflection surface of the second reflection unit 222. In other words, the first reflection unit 221 may be located on one side of the optical axis of the reflection surface of the second reflection unit 222, and the fingerprint sensor 23 may be located on the other side of the optical axis of the reflection surface of the second reflection unit 222. If the second reflection unit 222 has two reflection surfaces, one reflection surface may be disposed toward the first reflection unit 221, and the other reflection surface may be disposed toward the fingerprint sensor 23. That is, the first reflection unit 221 and the fingerprint sensor 23 may be respectively located in different directions toward the two different reflection surfaces.

The reflection surface of the second reflection unit 222 may be substantially parallel to the reflection surface of the first reflection unit 221, which means that the optical axis of the reflection surface of the second reflection unit 222 is parallel or nearly parallel to the optical axis of the reflection surface of the first reflection unit 221.

The first reflection unit 221 and the second reflection unit 222 may be the same as or similar to the reflection unit 22 in the liquid crystal display fingerprint recognition apparatus shown in above FIG. 1 and FIG. 2, and reference may be made to the above for the details, which will not be repeated herein.

The fingerprint light source 21 may be the same as or similar to the fingerprint light source 21 in the liquid crystal display fingerprint recognition apparatus of above FIG. 1 or FIG. 2, and reference may be made to the above for the details, which will not be repeated herein.

The light emitted by the fingerprint light source 21 is reflected by the finger, then passes through the cover plate 13 and the liquid crystal panel 12 in sequence and then is incident onto the reflection surface of the first reflection unit 221, the received light is reflected by the reflection surface of the first reflection unit 221 to the reflection surface of the second reflection unit 222, and reflected by the reflection surface of the second reflection unit 222 to the photosensitive surface of the fingerprint sensor 23, so that the fingerprint sensor 23 generates a fingerprint image according to the received light, and then performs fingerprint detection.

The liquid crystal display fingerprint recognition apparatus provided by the embodiment of the present application may include: a display module and a fingerprint module; where the display module includes a liquid crystal panel and a backlight module that is disposed behind the liquid crystal panel; the fingerprint module includes a fingerprint light source, a first reflection unit, a second reflection unit and a fingerprint sensor, and the first reflection unit, the second reflection unit and the fingerprint sensor are located between the liquid crystal panel and the backlight module; and the reflection surface of the first reflection unit is disposed toward the liquid crystal panel to receive the light that is emitted by the fingerprint light source, then is reflected, and then is incident through the liquid crystal panel; the first reflection unit is further configured to make the light reflected by the reflection surface of the first reflection unit incident to the reflection surface of the second reflection unit, and the reflection surface of the second reflection unit is disposed toward the photosensitive surface of the fingerprint sensor, so that the light reflected by the reflection surface of the second reflection unit is incident onto the photosensitive surface of the fingerprint sensor. The liquid crystal display fingerprint recognition apparatus can set the first reflection unit, the second reflection unit and the fingerprint sensor between the liquid crystal panel and the backlight module of the display module, and the light incident through the liquid crystal panel is reflected to the photosensitive surface of the fingerprint sensor by the first reflection unit and the second reflection unit in sequence, which prevents fingerprint light being blocked by the backlight module of the LCD; and the light is reflected by the first reflection unit and the second reflection unit, which realizes an under-screen optical signal detection loop of the optical fingerprint for the LCD, and realizes the under-screen optical fingerprint recognition for the LCD.

In the liquid crystal display fingerprint recognition apparatus provided by the embodiment, the light incident through the liquid crystal panel is reflected to the photosensitive surface of the fingerprint sensor by the first reflection unit and the second reflection unit in sequence, and folding of the optical path is achieved by the first reflection unit and second reflection unit, which shortens the distance between the liquid crystal panel and the backlight module, realizes the thinness of the fingerprint recognition apparatus of the LCD and increases the object distance of the fingerprint sensor at the same time, thereby improving the field of view range of the fingerprint sensor and expanding the visible fingerprint area.

On the basis of the liquid crystal display fingerprint recognition apparatus shown in above FIG. 3, an embodiment of the present application may also provide a liquid crystal display fingerprint recognition apparatus. FIG. 4 is a fourth schematic stack diagram of a liquid crystal display fingerprint recognition apparatus according to an embodiment of the present application. As shown in FIG. 4, the liquid crystal display fingerprint recognition apparatus is based on what is shown in above FIG. 3, where the fingerprint module 2 may further include a transmission unit 25.

The transmission unit 25 may be located between the first reflection unit 221 and the second reflection unit 222, that is, a surface of the transmission unit 25 may be disposed toward the reflection surface of the first reflection unit 221 for receiving the light reflected by the first reflection unit 221, and another surface of the transmission unit 25 is disposed toward the reflection surface of the second reflection unit 222 for transmitting the light reflected by the first reflection unit 221 to the reflection surface of the second reflection unit 222.

The transmission unit 25 may be the same as or similar to the transmission unit 25 in the liquid crystal display fingerprint recognition apparatus shown in FIG. 1 and FIG. 2 in the above embodiments, and reference may be made to the above for the details, which will not be repeated herein.

The optical axis of the transmission unit 25 may be perpendicular to both the optical axis of the reflection surface of the first reflection unit 221 and the optical axis of the reflection surface of the second reflection unit 222. Certainly, the optical axis of the transmission unit 25 may not be perpendicular to the optical axis of the reflection surface of the first reflection unit 221, nor to the optical axis of the reflection surface of the second reflection unit 222. The optical axis of the transmission unit 25 may be perpendicular to both the optical axis of the reflection surface of the first reflection unit 221 and the optical axis of the reflection surface of the second reflection unit 222, so that the light transmitted by the transmission unit 25 is incident on the reflection surface of the second reflection unit 222 as much as possible is perpendicular to the optical axis, thereby avoiding omission of the light and ensuring the clarity and integrity of the fingerprint image, and thus ensuring the accuracy of fingerprint detection.

If there are two reflection units in the fingerprint module, that is, the first reflection unit 221 and the second reflection unit 222, then the reflection surface of the first reflection unit 221 is toward the liquid crystal panel 11, and the reflection surface of the first reflection unit 221 is configured to receive the light incident through the liquid crystal panel 11; as shown in FIG. 3, if there is one reflection surface in the first reflection unit 221, then the reflection surface of the first reflection unit 221 is also toward a surface of the transmission unit 11 to reflect the light incident through the liquid crystal panel 11 to the transmission unit 11. The liquid crystal panel 11 and the transmission unit 11 may be located in different directions of the reflection surface of the first reflection unit 221, where the different directions of the reflection surface of the first reflection unit 221 may be distinguished by the optical axis of the first reflection unit 221, that is, the different directions may refer to different directions on both sides of the optical axis of the reflection surface of the first reflection unit 221. That is to say, the liquid crystal panel 11 may be located on one side of the optical axis of the reflection surface of the first reflection unit 221, and the transmission unit 11 may be located on the other side of the optical axis of the reflection surface of the first reflection unit 221. If there are two reflection surfaces in the first reflection unit 221, one reflection surface may be disposed toward the liquid crystal panel 11, and the other reflection surface may be disposed toward the transmission unit 11. That is, the liquid crystal panel 11 and the transmission unit 11 may be respectively located in different directions toward the two different reflection surfaces.

The reflection surface of the second reflection unit 222 is toward another surface of the transmission unit 25 for receiving the light incident through the transmission unit 25; as shown in FIG. 3, if there is one reflection surface in the reflection unit 222, the reflection surface of the second reflection unit 222 is also toward the photosensitive surface of the fingerprint sensor 23 to reflect the light incident through the transmission unit 25 to the photosensitive surface of the fingerprint sensor 23. The transmission unit 25 and the fingerprint sensor 23 may be located in different directions of the reflection surface of the second reflection unit 222, where the different directions of the reflection surface of the second reflection unit 222 may be distinguished by the optical axis of the second reflection unit 222, that is, the different directions may refer to different directions on both sides of the optical axis of the reflection surface of the second reflection unit 222. That is to say, the transmission unit 25 may be located on one side of the optical axis of the reflection surface of the second reflection unit 222, and the fingerprint sensor 23 is located on the other side of the optical axis of the reflection surface of the second reflection unit 222. If there are two reflection surfaces in the second reflection unit 222, then one reflection surface may be disposed toward the transmission unit 25, and the other reflection surface may be disposed toward the fingerprint sensor 23. That is, the transmission unit 25 and the fingerprint sensor 23 may be respectively located in different directions toward the two different reflection surfaces.

In the liquid crystal display fingerprint recognition apparatus shown in FIG. 3 or FIG. 4, the second reflection unit 222, the fingerprint sensor 23 and the transmission unit 25 of the fingerprint module 2 may be an integrated module, which can effectively ensure the reflection unit.

In the liquid crystal display fingerprint recognition apparatus provided by the embodiment, the light emitted by the reflection surface of the first reflection unit is transmitted to the reflection surface of the second reflection unit by the transmission unit disposed between the first reflection unit and the second reflection unit, which improves the focus of the fingerprint light, makes a fingerprint image generated based on the fingerprint light clearer, and ensures the accuracy of fingerprint detection.

Optionally, in the liquid crystal display fingerprint recognition apparatus shown in FIG. 3 or FIG. 4, the fingerprint light source 21 may be located at a side end of the liquid crystal panel 11 near a non-display area. The example in which the fingerprint light source 21 is located at the side end of the liquid crystal panel 11 near the non-display area is shown in above FIG. 1.

The fingerprint light source 21 is located at a side end of the liquid crystal panel 11 near the non-display area, which can avoid display interference caused by the fingerprint light source 21 and ensure the display effect of the display module while the under-screen optical fingerprint recognition can be realized for the LCD.

Optionally, the fingerprint module 2 further includes: a PCB 24. The PCB 24 may be connected to the fingerprint sensor 23; the fingerprint source 21 may be located on the PCB 24.

Optionally, the PCB 24 may be a hard PCB, or a FPCB.

It should be noted that in FIG. 3 or FIG. 4, the FPCB is taken as the PCB 24 for illustrating. The example of taking the hard PCB as the PCB 24 is similar to the FPCB and will not be repeated herein.

Optionally, in another example, the fingerprint light source 21 may also be located between the liquid crystal panel 11 and the backlight module 12. If the fingerprint light source 21 may be located between the liquid crystal panel 11 and the backlight module 12, and the light emitting surface of the fingerprint light source 21 is toward the liquid crystal panel 11.

In the liquid crystal display fingerprint recognition apparatus provided in the embodiment, the fingerprint light source 21 is disposed between the liquid crystal panel 11 and the backlight module 12, which improves the integration of the liquid crystal display fingerprint recognition apparatus.

Optionally, the fingerprint light source 21 as shown above may be an infrared light source regardless of the position of the fingerprint light source 21. The infrared light source may be an infrared light source having a wavelength of 850 nm. The infrared light source may be, for example, an infrared LED light source, an infrared VCSEL, an infrared laser diode, etc.

Optionally, if the fingerprint source 21 is an infrared light source, in order to avoid interference of visible light on fingerprint detection, the fingerprint module 2 further includes: an infrared filter (not shown) for filtering out the visible light other than the infrared light through the infrared filter.

In an implementation, the infrared filter may be located on a surface of the first reflection unit 221 toward the second reflection unit 222 as shown in FIG. 3 or FIG. 4, or the infrared filter is located on a surface of the second reflection unit 222 toward the fingerprint sensor 23 as shown in FIG. 3 or FIG. 4; or the infrared filter is located on a surface of the fingerprint sensor 23 toward the second reflection unit 222 as shown in FIG. 3 or FIG. 4.

In another implementation, the infrared filter may be disposed on a light incident surface or a light exit surface of the transmission unit 25 in FIG. 4.

In the liquid crystal display fingerprint recognition apparatus provided by the embodiment, the fingerprint light source is set as an infrared light source, so that the fingerprint light of the fingerprint detection is the infrared light, which can avoid the interference of the fingerprint light on the visible light source for display, and ensure the display effect of the display module; and at the same time, the interference of the visible light source on the fingerprint light is avoided, and the accuracy of the fingerprint detection is effectively ensured.

It should be noted that the above embodiments of the present application are only some possible examples of the liquid crystal fingerprint module provided by the present application, the fingerprint module provided by the present application may further include other numbers of reflection units, such as three or four reflection units, and correspondingly, the positional relationship of the reflection units is adjusted appropriately, which still fall within the scope of protection of the embodiments of the present application as long as the light incident to the fingerprint sensor is a light reflected by the reflection unit.

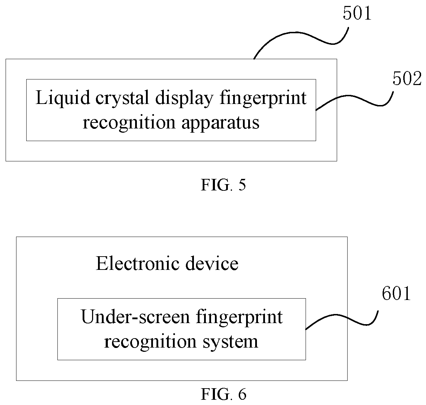

An embodiment of the present application may further provide an electronic device having the above liquid crystal display fingerprint recognition apparatus. FIG. 5 is a schematic structural diagram of an electronic device according to the embodiment of the present application. As shown in FIG. 5, the electronic device may include a housing 501 and a liquid crystal display fingerprint recognition apparatus 502. The liquid crystal display fingerprint recognition apparatus 502 is located in the housing 501. Certainly, the electronic device may not include the housing 501, and is not limited to the structure shown in FIG.5. The electronic device may also include other components, which will not be detailed herein.

The liquid crystal display fingerprint recognition apparatus 502 may be the liquid crystal display fingerprint recognition apparatus shown in any of the FIGs. 1 to 4 described above.

The electronic device may include any of the above liquid crystal display fingerprint recognition apparatus. Since the reflection unit and the fingerprint sensor are disposed between the liquid crystal panel and the backlight module of the display module, and the light incident through the liquid crystal panel is reflected by the reflection unit to the photosensitive surface of the fingerprint sensor, fingerprint light is prevented from being blocked by the backlight module of the LCD; the light is reflected by the reflection unit, which realizes an under-screen optical signal detection loop of the optical fingerprint for the LCD, and then realizes the under-screen optical fingerprint recognition for the LCD.

An embodiment of the present application further provides an under-screen fingerprint recognition system, for the schematic structural diagram therefore, reference may be specifically made to the fingerprint module in the liquid crystal display fingerprint recognition apparatus according to any one of FIGs. 1-4 described above, which will not be repeated herein. The under-screen fingerprint recognition system is applicable to being located under a liquid crystal display module that has a liquid crystal panel and a backlight module to perform under-screen optical fingerprint detection. The under-screen fingerprint recognition system includes: a fingerprint light source, a reflection unit and a fingerprint sensor.

The fingerprint light source is configured to provide light for fingerprint detection, and the reflection unit and the fingerprint sensor are disposed between the liquid crystal panel and the backlight module; the reflection unit has a reflection surface that is disposed toward the liquid crystal panel to receive the light that is emitted by the fingerprint light source, then is reflected, and then is incident through the liquid crystal panel.

The reflection unit is further configured to reflect the light to the photosensitive surface of the fingerprint sensor;
the fingerprint sensor is configured to detect, according to the received light, a fingerprint image of a finger pressing on the liquid crystal display module, and a field of view range of the fingerprint sensor is located in a display area of the liquid crystal display module.

In an implementation, the under-screen fingerprint recognition system further includes: a transmission unit.

The transmission unit is located between the liquid crystal panel and the reflection unit to transmit the light incident through the liquid crystal panel to a reflection surface of the reflection unit.

In another implementation, the reflection unit includes: one reflection unit; the transmission unit is disposed toward the liquid crystal panel to receive the light incident through the liquid crystal panel; the reflection surface of the reflection unit is toward the transmission unit to receive the light incident through the transmission unit; and the reflection surface of the reflection unit is also toward the photosensitive surface of the fingerprint sensor to reflect the light to the photosensitive surface of the fingerprint sensor.

In still another implementation, the reflection unit includes: a first reflection unit and a second reflection unit;
a reflection surface of the first reflection unit is toward the liquid crystal panel to receive the light incident through the liquid crystal panel; and the reflection surface of the first reflection unit is also toward a surface of the transmission unit to reflect the light incident through the liquid crystal panel to the transmission unit;
a reflection surface of the second reflection unit is toward another surface of the transmission unit to receive light incident through the transmission unit; and the reflection surface of the second reflection unit is also toward the photosensitive surface of the fingerprint sensor to reflect the light incident through the transmission unit to the photosensitive surface of the fingerprint sensor.

In still another implementation, the fingerprint light source is located at a side end of the liquid crystal panel near a non-display area; or it is located between the liquid crystal panel and the backlight module.

In still another implementation, the fingerprint module further includes: a PCB that is connected to the fingerprint sensor; the fingerprint light source is located on the PCB.

In still another implementation, the PCB is a hard PCB, or a FPCB.

In still another implementation, the fingerprint source is an infrared source.

The under-screen fingerprint recognition system provided by the embodiment of the present invention can reflect the light incident through the liquid crystal panel to the photosensitive surface of the fingerprint sensor, which prevents fingerprint light being blocked by the backlight module of the LCD, and the light is reflected through the reflection unit, which realize an under-screen optical signal detection loop of optical fingerprint for the LCD, and then realizes the under-screen optical fingerprint recognition for the LCD.

An embodiment of the present application may further provide an electronic device having the above under-screen fingerprint recognition system. FIG. 6 is a schematic structural diagram of another electronic device according to the embodiment of the present application. As shown in FIG. 6, the electronic device may include an under-screen fingerprint recognition system 601. The under-screen fingerprint recognition system 601 may be the fingerprint module 2 in the liquid crystal display fingerprint recognition apparatus shown in any of the above FIGs. 1-4.

The electronic device may include any of the above under-screen fingerprint recognition systems. Since the reflection unit and the fingerprint sensor of the under-screen fingerprint recognition system can be disposed between the liquid crystal panel and the backlight module of the display module, and the light incident through the liquid crystal panel is reflected by the reflection unit to the photosensitive surface of the fingerprint sensor, the fingerprint light is prevented from being blocked by the backlight module of the LCD; and the light is reflected by the reflection unit, which realizes an under-screen optical signal detection loop of the optical fingerprint for the LCD, and realizes the under-screen optical fingerprint recognition for the LCD.

Those skilled in the art can understand that all or some of the steps for implementing the above method embodiments may be completed by using hardware related to program instructions, the foregoing program may be stored in a computer readable storage medium, and when the program is executed, the steps of the above method embodiments are performed; while the foregoing storage medium includes: a medium that can store program codes, such as a ROM, a RAM, a magnetic disk, or an optical disk.

Finally, it should be noted that the above embodiments are merely illustrative of the technical solutions of the present application, and are not to limit them; although the present application has been described in detail with reference to the foregoing embodiments, those skilled in the art should understand that they may still modify the technical solutions described in the foregoing embodiments, or equivalently substitute some or all of the technical features; and the modifications or substitutions do not deviate the essence of the corresponding technical solutions from the scope of the technical solutions of various embodiments of the present application.

## Claims

1. An under-screen fingerprint recognition system, applicable to being located under a liquid crystal display module that has a liquid crystal panel and a backlight module to perform under-screen optical fingerprint detection, wherein the under-screen fingerprint recognition system comprises: a fingerprint light source, a reflection unit and a fingerprint sensor;
the fingerprint light source is configured to provide light for fingerprint detection, the reflection unit and the fingerprint sensor are disposed between the liquid crystal panel and the backlight module; the reflection unit has a reflection surface that is disposed toward the liquid crystal panel to receive the light that is emitted by the fingerprint light source, then is reflected, and then is incident through the liquid crystal panel;
the reflection unit is further configured to reflect the light to a photosensitive surface of the fingerprint sensor;
the fingerprint sensor is configured to detect, according to light that is received, a fingerprint image of a finger pressing on the liquid crystal display module, and a field of view range of the fingerprint sensor is located in a display area of the liquid crystal display module.

2. The under-screen fingerprint recognition system of claim 1, wherein the under-screen fingerprint recognition system further comprises: a transmission unit;
the transmission unit is disposed between the liquid crystal panel and the reflection unit to transmit light incident through the liquid crystal panel to the reflection surface of the reflection unit.

3. The under-screen fingerprint recognition system of claim 2, wherein the reflection unit comprises: one reflection unit; a surface of the transmission unit is disposed toward the liquid crystal panel to receive the light incident through the liquid crystal panel, another surface of the transmission unit is disposed toward the reflection surface of the reflection unit to transmit the light incident through the transmission unit to the reflection surface of the reflection unit; the reflection surface of the reflection unit is further toward the photosensitive surface of the fingerprint sensor to reflect the light to the photosensitive surface of the fingerprint sensor.

4. The under-screen fingerprint recognition system of claim 2, wherein the reflection unit comprises: a first reflection unit and a second reflection unit; a surface of the transmission unit is disposed toward a reflection surface of the first reflection unit to receive light reflected by the first reflection unit; another surface of the transmission unit is disposed toward a reflection surface of the second reflection unit to transmit the light reflected by the first reflection unit to the reflection surface of the second reflection unit;
the reflection surface of the first reflection unit is disposed toward the liquid crystal panel, and is configured to reflect the light incident through the liquid crystal panel to the transmission unit;
the reflection surface of the second reflection unit is disposed toward the transmission unit, and is configured to reflect the light incident through the transmission unit to the photosensitive surface of the fingerprint sensor.

5. The under-screen fingerprint recognition system of claim 1, wherein the fingerprint light source is located at a side end of the liquid crystal panel near a non-display area, or the fingerprint light source is located between the liquid crystal panel and the backlight module.

6. The under-screen fingerprint recognition system of claim 5, wherein the fingerprint module further comprises: a printed circuit board PCB, and the PCB is connected to the fingerprint sensor; the fingerprint light source is located on the PCB.

7. The under-screen fingerprint recognition system of claim 6, wherein the PCB is a hard PCB, or a flexible printed circuit board FPCB.

8. The under-screen fingerprint recognition system of any one of claims 1 to 7, wherein the fingerprint light source is an infrared light source.

9. An electronic device, comprising: the under-screen fingerprint recognition system according to any one of claims 1 to 8.

10. A liquid crystal display fingerprint recognition apparatus, comprising: a display module and a fingerprint module; wherein the display module comprises a liquid crystal panel and a backlight module that is disposed behind the liquid crystal panel; the fingerprint module comprises a fingerprint light source, a reflection unit and a fingerprint sensor;
the reflection unit and the fingerprint sensor are disposed between the liquid crystal panel and the backlight module; a reflection surface of the reflection unit is disposed toward the liquid crystal panel to receive light that is emitted by the fingerprint light source, then is reflected, and then is incident through the liquid crystal panel;
the reflection unit is further configured to reflect the light to a photosensitive surface of the fingerprint sensor.

11. The liquid crystal display fingerprint recognition apparatus of claim 10, wherein the fingerprint module further comprises: a transmission unit;
the transmission unit is located between the liquid crystal panel and the reflection unit to transmit the light incident through the liquid crystal panel to the reflection surface of the reflection unit.

12. The liquid crystal display fingerprint recognition apparatus of claim 11, wherein the reflection unit comprises: one reflection unit; a surface of the transmission unit is disposed toward the liquid crystal panel to receive the light incident through the liquid crystal panel; another surface of the transmission unit is toward the reflection surface of the reflection unit to transmit the light incident through the transmission unit to the reflection surface of the reflection unit; the reflection surface of the reflection unit is also toward the photosensitive surface of the fingerprint sensor, to reflect the light to the photosensitive surface of the fingerprint sensor.

13. The liquid crystal display fingerprint recognition apparatus of claim 11, wherein the reflection unit comprises: a first reflection unit and a second reflection unit; a surface of the transmission unit is disposed toward a reflection surface of the first reflection unit to receive light reflected by the first reflection unit, and another surface of the transmission unit is disposed toward a reflection surface of the second reflection unit to transmit the light reflected by the first reflection unit to the reflection surface of the second reflection unit;
the reflection surface of the first reflection unit is disposed toward the liquid crystal panel, and is configured to reflect the light incident through the liquid crystal panel to the transmission unit;
the reflection surface of the second reflection unit is disposed toward the transmission unit, and is configured to reflect the light incident through the transmission unit to the photosensitive surface of the fingerprint sensor.

14. The liquid crystal display fingerprint recognition apparatus of claim 10, wherein the fingerprint light source is located at a side end of the liquid crystal panel near a non-display area, or the fingerprint light source is located between the liquid crystal panel and the backlight module.

15. The liquid crystal display fingerprint recognition apparatus of claim 14, wherein the fingerprint module further comprises: a printed circuit board PCB, and the PCB is connected to the fingerprint sensor; the fingerprint light source is located on the PCB.

16. The liquid crystal display fingerprint recognition apparatus of claim 15, wherein the PCB is a hard PCB, or a flexible printed circuit board FPCB.

17. The liquid crystal display fingerprint recognition apparatus of any one of claims 10 to 16, wherein the fingerprint light source is an infrared light source.
